# EUROPÄISCHE PATENTSCHRIFT

(11) **EP 3 995 940 B1**
(45) Veröffentlichungstag und Bekanntmachung des Hinweises auf die Patenterteilung: **31.12.2025**
(21) Anmeldenummer: 20206575.1
(22) Anmeldetag: 10.11.2020
(51) Int. Cl.: G06F 3/044, G06F 3/039

(54) **MANUELL BETÄTIGBARE BEFEHLSEINGABE-VORRICHTUNG SOWIE SENSOR-ANORDNUNG FÜR DESSEN BETRIEB**
MANUALLY OPERABLE COMMAND INPUT DEVICE AND SENSOR ARRANGEMENT FOR ITS OPERATION
DISPOSITIF D'ENTRÉE D'INSTRUCTIONS POUVANT ÊTRE ACTIONNÉ MANUELLEMENT AINSI QU'AGENCEMENT DE CAPTEUR POUR SON FONCTIONNEMENT

(43) Veröffentlichungstag der Anmeldung: 11.05.2022
(73) Patentinhaber: RAFI GmbH & Co. KG, 88276 Berg (DE)
(72) Erfinder: FLEISCHER, Frank, 88368 Bergatreute (DE); MENNIG, Sebastian, 88353 KISSLEGG (DE); HOFMANN, Steffen, 88364 Wolfegg (DE); BULACH, Eric, 88074 Meckenbeuren (DE); KRAFT, Markus, 88250 Weingarten (DE); HÄMMERLE, Maximilian, 88289 Waldburg (DE)
(74) Vertreter: Christ, Niko

(56) Entgegenhaltungen:
- EP-A1- 3 579 088

## Beschreibung

Die Erfindung bezieht sich auf eine Befehlseingabe-Vorrichtung nach dem Oberbegriff des Patentanspruches 1.

Eine solche Befehlseingabe-Vorrichtung ist aus der EP 3 579 088 A1 vorbekannt.

Gerade in der jüngeren Vergangenheit ist es oftmals erforderlich, eine Befehlseingabe-Vorrichtung zur Verfügung zu stellen, die eine vorgegebene und bekannte Haptik aufweist, da die Befehlseingabe auf glatten Oberflächen einen Blickkontakt während des Bedienvorganges zwischen dem Benutzer und den anzusteuernden Funktionen erfordert**.** Daher ist beispielsweise aus der DE 102019 101 611 B3 eine Bedienanordnung auf einem Touchpad oder Touchscreen bekannt geworden. Durch eine manuelle Berührung auf einer zugehörigen Eingabefläche löst eine Kapazität diese Veränderung aus, mittels der mehrere durch ein Array von Messelektroden erzeugter Messkapazitäten ortsunabhängig zu detektieren ist.

Um nunmehr eine manuell erfassbare Zuordnung zwischen dem in einem Display vorgesehenen Bediensymbol und einem Befehlsgeber herzustellen, ist dieser auf der Anzeigeseite beispielsweise mittels eines Klebers angebracht. Bei der Bewegung des Befehlsgebers entsteht eine messbare Veränderung eines elektrischen Feldes, die dem jeweiligen Bediensymbol und der dahinter gelagerten Funktion zugeordnet ist.

Durch die DE 10 2016 121 076 A1 ist eine Bedienvorrichtung für eine Fahrzeugkomponente, insbesondere Mensch-Maschine-Schnittstelle bekannt geworden. Insbesondere während des Bewegungszustandes des Fahrzeuges ist eine visuelle Kontaktaufnahme zwischen dem Bediener und der Bedienvorrichtung oftmals nicht oder lediglich in einem eng begrenzten Zeitraum möglich. Auf einer Vorderseite der Bedienvorrichtung ist eine Anzeigefläche und eine zu der Vorderseite abgewandte Rückseite vorgesehen. Auf und/oder vor der Abdeckplatte des Gehäuses der Bedienvorrichtung ist dabei ein Bedienelement positioniert, das manuell bedienbar ist. Zur Speisung der Energieversorgungseinheit des Bedienelementes mit elektrischer Energie ist der Rückseite der Abdeckplatte mindestens eine erste Spule zugewandt, wobei in
und/oder an der Bedienelementeinheit mindestens eine mit der mindestens einen ersten Spule induktiv gekoppelten und mit der Energieversorgungseinheit verbundenen zweiten Spule angeordnet ist. Derart ist demnach ein induktiv ausgebildetes Wirbelstrom-Feld generiert, das durch die Bewegungen des Befehlsgebers verändert ist.

Aus der DE 10 2017 120 952 A1, DE 10 2017 121 896 A1 oder DE 10 2018 131 573 A1 sind weitere solcher Befehlseingabe-Vorrichtungen bekannt geworden, die entweder auf der physikalischen Grundlage einer Kapazitätsveränderung in einem elektrischen Feld oder Veränderungen von induktiv erzeugten Wirbelstrom-Feldern basieren.

Jede der beiden physikalischen Funktionsweisen, nämlich kapazitiv oder induktiv entstehende Veränderungen, sind zur Erfassung von manuell hervorgerufenen Bewegungen einsetzbar. Jedoch weisen diese Befehlseingabe-Vorrichtungen den Nachteil auf, dass ausschließlich ein Schaltsignal generiert ist, denn entweder ist eine Veränderung des elektrischen Feldes oder die Veränderung eines induktiven Wirbelstrom-Feldes messbar und auswertbar. Solche Befehlseingabefunktionen sind jedoch äußerst störanfällig und können insbesondere für die Steuerung von Fahrzeugen, Werkzeugmaschinen oder dergleichen zu Unfällen aufgrund von Fehlfunktionen führen. Beispielsweise lösen Feuchtigkeitspartikel Veränderungen eines elektrischen Feldes aus oder metallische Fremdkörper z.B. in einem metallbearbeitenden Betrieb sowie Temperaturschwankungen können die Einstellungen eines induktiven Wirbelstrom-Feldes derart beeinflussen, dass eine zuverlässige Steuerfunktion ausfällt.

Es ist daher Aufgabe der Erfindung, eine Befehlseingabe-Vorrichtung bzw. eine Sensor-Anordnung für den Betrieb einer solchen der eingangs genannten Gattungen derart weiterzubilden, dass ein redundantes Schaltsignal durch die Veränderungen eines elektrischen Feldes und eine Veränderung von induktiv erzeugten Wirbelstrom-Feldern unabhängig voneinander messbar, auswertbar und zur Umwandlung in ein Schaltsignal für ein Fahrzeug, eine Werkzeugmaschine oder ein sonstiges elektrisches Gerät nutzbar ist.

Diese Aufgabe ist durch die Merkmale des Patentanspruchs 1 gelöst.

Weitere vorteilhafte Weiterbildungen der Erfindung ergeben sich aus den Unteransprüchen.

Bei der erfindungsgemäßen Befehlseingabe-Vorrichtung ist es besonders vorteilhaft, wenn fluchtend zu jedem Befehlsgeber zwei Sensoren der Sensor-Anordnung vorgesehen sind, durch die das elektrische Feld und das induktive Wirbelstrom-Feld unabhängig voneinander und parallel überlappend zueinander erzeugt ist, wenn durch die Bewegungen des Befehlsgebers zeitgleich das elektrische Feld und das Wirbelstrom-Feld beeinflusst ist, und wenn durch die Auswerteeinrichtung die jeweiligen Veränderungen des elektrischen Feldes und des Wirbelstrom-Feldes unabhängig voneinander feststellbar und in vorgegebene Schaltsignale umwandelbar sind, da dadurch eine redundante, also verifizierte Schaltfunktion entsteht, denn die Veränderung des elektrischen Feldes und des induktiven Wirbelstrom-Feldes sind von der Auswerteeinrichtung zeitgleich erfassbar. Erst diese zeitliche Übereinstimmung gibt diese eingegebene Schaltfunktion frei.

Es ist jedoch ohne weiteres technisch möglich, ausschließlich den erfindungsgemäßen Sensor-Aufbau zur Verfügung zu stellen, wenn der erste Sensor aus zwei galvanisch voneinander getrennten Sensorgläsern gebildet ist, wenn in jedem Sensorglas eine Vielzahl von elektrisch bestromten Leiterbahnen vorgesehen sind, wenn die Leiterbahnen des ersten Sensorglases senkrecht zu den Leiterbahnen des zweiten Sensorglases verlaufen, dass räumlich beabstandet zu den beiden Sensorgläser und galvanisch von diesen getrennt eine Leiterplatte angeordnet ist, die fluchtend oberhalb oder unterhalb der beiden Sensorgläser vorgesehen ist, wenn auf der Leiterplatte mindestens drei Spulen positioniert sind, die ein induktives Wirbelstrom-Feld erzeugen bzw.

Wirbelstrom-Veränderungen empfangen, wenn durch die Leiterbahnen der beiden Sensorgläser in dem jeweiligen Knotenpunkt ein elektrisches Feld entsteht, das durch die Abdeckplatte auf deren Außenseite abgestrahlt ist, wenn an einem manuell betätigbaren Befehlsgeber zwei räumlich voneinander getrennte Detektionsobjekte angeordnet sind, deren Bewegungen das elektrische Feld und das induktiv von den Spulen erzeugte und empfangene Wirbelstrom-Feld verändern, derart, dass diese Feld-Veränderungen durch eine Auswerteeinrichtung erkennbar und in elektrische Schaltsignale umwandelbar sind, denn dadurch entsteht ein nachrüstbarer oder flexibel verwendbarer Bausatz, der in beliebigen Mensch-Maschinen-Schnittstellen einbaubar ist und der redundante Schaltfunktion aufweist.

Folglich können vorteilhafter Weise die funktionalen und konstruktiven Gegebenheiten einer vollständig gekapselten Befehlseingabe-Vorrichtung mit einem manuell bedienbaren Befehlsgeber kombiniert sein und die von dem Befehlsgeber ausgeführten Bewegungen, die sowohl rotierend oder linear ausgeführt sein können, sind durch den jeweiligen Bediener erkennbar, sodass jeder Befehlsgeber eine bestimmte und damit wieder erkennbare Haptik aufweist. Insbesondere während der Bedienung von fahrenden Maschinen oder während des Arbeitsprozesses an einer Werkzeugmaschine, deren Arbeitsabläufe visuell durch den Maschinenbediener permanent zu überwachen sind, und folglich eine Bedienung der Befehlseingabe-Vorrichtung mittels der Sehkraft des Bedieners nicht möglich ist, eignen sich solche Kombinationen von Befehlsgebern an den Befehlseingabe-Vorrichtungen, da der Bediener sein Augenmerk auf die Bewegungen des Fahrzeuges bzw. den Arbeitsablauf der Werkzeugmaschine vollständig ausrichten kann und die Eingabe von Steuerbefehlen über die spürbaren Befehlsgeber erfolgt.

Dabei sind die Befehlsgeber fluchtend zu zwei im Inneren der Befehlseingabe-Vorrichtung vorgesehenen Sensoren positioniert. Der Sensor-Aufbau ist vorteilhafter Weise darauf ausgerichtet, dass räumlich versetzt zueinander und parallel verlaufend sowohl ein elektrisches Feld durch die kapazitiven Eigenschaften der beiden Sensorgläser entsteht als auch ein induktiv aufgebautes Wirbelstrom-Feld durch eine Leiterplatte mit mindestens drei Spulen gebildet ist. In dem Befehlsgeber sind zwei voneinander getrennte Detektionsobjekte angeordnet, die aus einem metallischen und/oder anderweitig leitfähigen Werkstoff hergestellt sind. Sobald sich demnach der Befehlsgeber entsprechend bewegt, entstehen Veränderungen in dem elektrischen Feld und dem induktiven Wirbelstrom-Feld, die von den beiden Sensoren unabhängig voneinander detektiert werden**.**

Erst wenn eine solche zeitliche Übereinstimmung der Detektion von Veränderungen des elektrischen Feldes und des Wirbelstrom-Feldes von der Auswerteeinrichtung erfasst ist, gibt diese das entsprechende Steuersignal frei. Demnach ist eine unbeabsichtigte Auslösung von Steuersignalen aufgrund der vorgesehenen Redundanz des Sensor-Aufbaus verhindert, die beispielsweise durch Umwelteinflüsse wie Temperaturschwankungen, Feuchtigkeit, Fremdkörper wie Metallspäne oder ähnlichem ausgelöst werden können.

Der Sensor-Aufbau baut äußerst kompakt, da die jeweiligen Sensorgläser und die Leiterplatte eine äußerst dünn bemessene Höhe aufweisen, nämlich vorzugsweise 0,55 mm oder 1,10 mm für die beiden Sensorgläser sowie 0,14 mm für die Leiterplatte. Zudem sind die Sensorgläser transparent, so dass die Bediensymbole von außen erkennbar sind.

In der Zeichnung ist eine erfindungsgemäße Befehlseingabe-Vorrichtung sowie der konstruktive Aufbau einer erfindungsgemäßen Sensor-Anordnung dargestellt, die nachfolgend näher erläutert sind. Im Einzelnen zeigt:
- Figur 1: einen schematischen Ausschnitt aus einer Fahrzeugkabine eines Fahrzeuges mit einer seitlich neben dem Lenkrad angeordneten Befehlseingabe-Vorrichtung, die eine Abdeckplatte aufweist, auf deren Außenseite eine Vielzahl von unterschiedlich ausgestalteten Befehlsgebern manuell betätigbar angeordnet sind,
- Figur 2: einen vergrößerten Schnitt des Befehlsgebers gemäß Figur 1 entlang der Schnittlinie II" mit zwei Sensoren, durch die ein elektrisches Feld und ein induktives Wirbelstrom-Feld in Richtung des Befehlsgebers abgestrahlt ist,
- Figur 3a: eine Draufsicht auf den Befehlsgeber gemäß Figur 2, in dem zwei Detektionsobjekte räumlich und galvanisch getrennt voneinander angeordnet sind,
- Figur 3b: eine dem zweiten Sensor gemäß Figur 2 zugeordnete Leiterplatte, auf der drei Spulen als Sender und Empfänger für das induktive Wirbelstrom-Feld angeordnet sind, in Draufsicht,
- Figur 3c: zwei Sensorgläser des ersten Senders gemäß Figur 2, mit einer Vielzahl von Leiterbahnen, die senkrecht zueinander verlaufen,
- Figur 3d: ein vergrößerter Ausschnitt der beiden übereinander liegenden Sensorgläser mit den daraus resultierenden Knotenpunkten gemäß Figur 3c,
- Figur 4a: einen vergrößerten Ausschnitt des Befehlsgebers gemäß Figur 3a mit dazugehörigen Verläufen der Sensorbahnen des induktiven Wirbelstrom-Feldes, ausgelöst durch die Bewegungen des zweiten Detektionsobjektes,
- Figur 4b: die Phasenverschiebungen an den beiden Empfangsspulen, die die Veränderungen des Wirbelstrom-Feldes erkennen und
- Figur 5: den Sandwichaufbau der Sensor-Anordnung und des Befehlsgebers, in perspektivischer Ansicht.

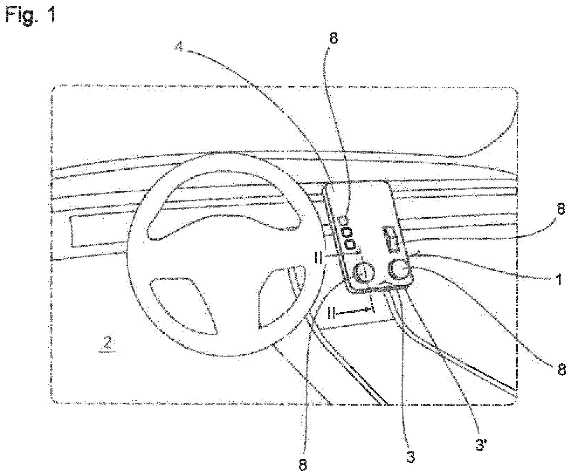

In Figur 1 ist eine manuell bedienbare Befehlseingabe-Vorrichtung 1 in einem Fahrzeug 2 zu entnehmen. Der Fahrer des Fahrzeuges 2 sollte seine visuelle Aufmerksamkeit dem Straßenverkehr widmen, sodass Befehlseingaben über den Tastsinn des Fahrers an der Befehlseingabe-Vorrichtung 1 erfolgen. Der Tastsinn des Fahrers erkennt dabei unterschiedliche Geometrien und Bewegungsmöglichkeiten von an der Vorrichtung 1 angebrachten Befehlsgebern 8. Diese können beispielsweise als Drehknopf, als Linearführung oder als Taster ausgebildet sein.

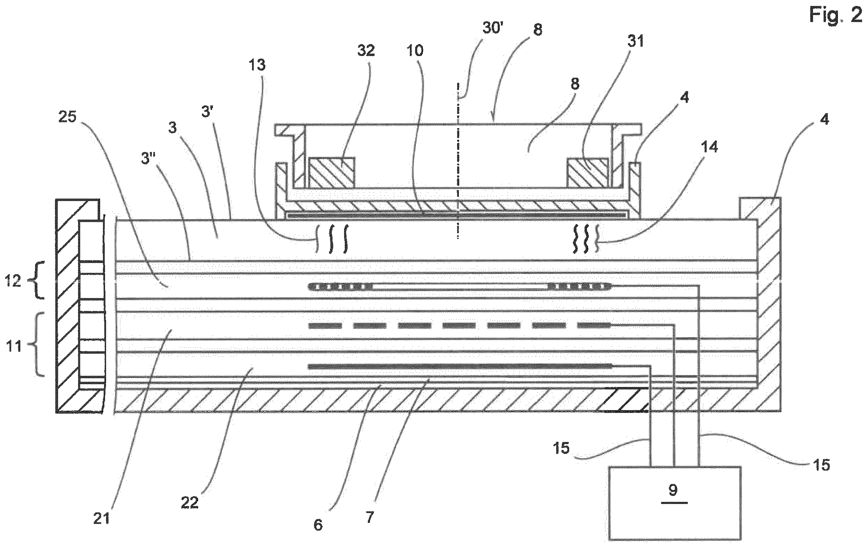

Aus Figur 2 ist ersichtlich, wie der Befehlsgeber 8 zunächst auf einer Außenseite 3' einer Abdeckplatte 3 der Befehlseingabe-Vorrichtung 1 angebracht ist. Der Befehlsgeber 8 weist ein Gehäuse 4 auf, dessen der Abdeckplatte 3 zugewandten Unterseite mittels eines Klebers 10 auf der Außenseite 3' befestigt ist. Der '(-) (alle sind Befehlsgeber) Befehlsgeber 8 rotiert um eine Symmetrieachse 30'. In dem Befehlsgeber 8 sind zwei Detektionsobjekte 31 und 32 angeordnet, die sowohl räumlich als auch galvanisch voneinander getrennt sind. Beide Detektionsobjekte 31 und 32 sind aus einem metallischen Werkstoff hergestellt, das elektrisch leitfähig ist.

Die Befehlseingabe-Vorrichtung 1 gemäß Figur 1 ist im gezeigten Ausführungsbeispiel der Art eines Touchscreen nachempfunden und die Abdeckplatte 3 ist transparent ausgestaltet, sodass die auf der Innenseite 3" der Abdeckplatte 3 untergebrachten Bedienungssymbole 7 von außen erkennbar sind. Darüber hinaus ist im Inneren der Vorrichtung 1 ein Display 6 vorgesehen. Jeder der Befehlsgeber 8 ist fluchtend zu einem jeweiligen Bediensymbol 7 positioniert. Folglich kann der Befehlsgeber 8 sowohl visuell einem der Bediensymbole 7 als auch über die geometrische Ausgestaltung des jeweiligen Befehlsgebers 8 zugeordnet werden.

Darüber hinaus ist Figur 2 zu entnehmen, wie die Sensor-Anordnung aufgebaut ist. Diese besteht zunächst aus einem ersten und einem zweiten Sensor 11 bzw. 12. Der Sensor 11 erzeugt - wie nachfolgend näher erläutert - ein elektrisches Feld 13 und der Sensor 12 ein induktives Wirbelstrom-Feld 14, die unabhängig voneinander entstehen und ausgewertet sind. Sowohl das elektrische Feld 13 als auch das induktive Wirbelstrom-Feld 14 werden von den Sensoren 11 bzw. 12 in Richtung der Abdeckplatte 3 abgestrahlt und treten durch diese in Richtung des Befehlsgebers 8 hinaus. Die beiden Detektionsobjekte 31 und 32 des jeweiligen Befehlsgebers 8 sind somit im unmittelbaren Wirkungsbereich des elektrischen Feldes 13 bzw. des induktiven Wirbelstrom-Feldes 14 positioniert. Die Symmetrieachse 30' des Befehlsgebers 8 ist zudem fluchtend zu einem Mittelpunkt 30 der beiden Sensoren 11 und 12 ausgerichtet, sodass die Befehlsgeber 8 fluchtend zu den beiden Sensoren 11 und 12 angeordnet sind.

Darüber hinaus sind die beiden Sensoren 11 und 12 über elektrische Leitungen 15 mit einer Auswerteeinrichtung 9 verbunden, durch die sowohl die Strömung der Sensoren 11 und 12 erfolgt als auch die Messung möglicher Veränderungen des elektrischen Feldes 13 bzw. des induktiven Wirbelstrom-Feldes 14.

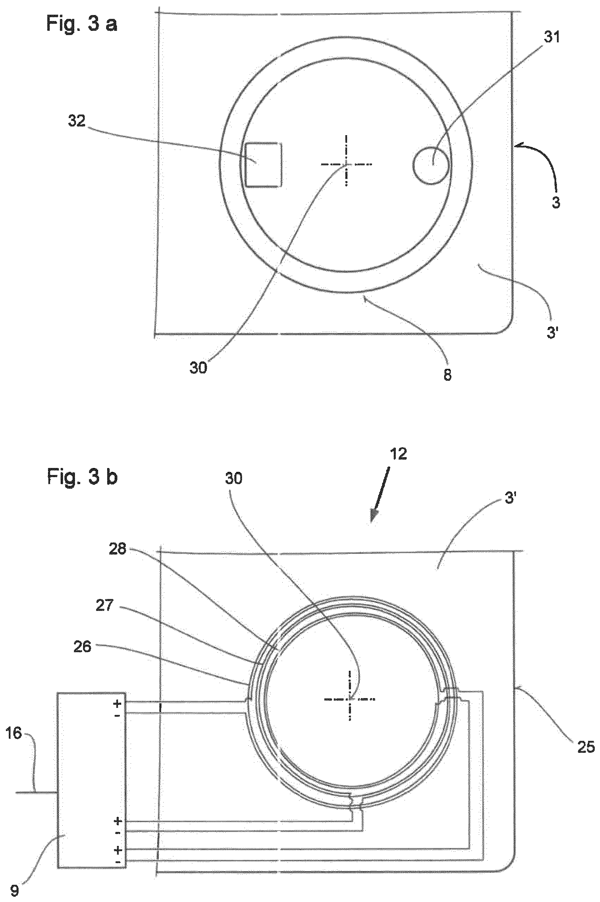

Insbesondere den Figuren 3a und 3b ist die fluchtende Positionierung des Befehlsgebers 8 zu dem zweiten Sensor 12 zu entnehmen, da die jeweiligen Mittelpunkte 30 des Befehlsgebers 8 und des zweiten Sensors 12 koaxial zueinander ausgerichtet sind. Der Sensor 12 besteht aus einer Leiterplatte 25 gemäß Figur 3b. Auf der Leiterplatte 25 sind drei Spulen 26, 27 und 28 kreisförmig angeordnet, deren jeweiliger Abstand oder Radius zu dem Mittelpunkt 30 konstant ist. Somit bildet jede Spule 26, 27, 28 mehrere Wicklungen, die um den Mittelpunkt 30 verlaufen. Mittels elektrischer Leitungen 15 sind die drei Spulen 26, 27 und 28 an einer Stromquelle 16 bzw. der Auswerteeinrichtung 9 angeschlossen. Die äußere Spule 26 dient als Sender zur Erzeugung des induktiven Wirbelstrom-Feldes 14. Die beiden inneren Spulen 27 und 28 sind die Empfänger und messen Veränderungen des induktiven Wirbelstrom-Feldes 14, wenn durch die Bewegung des Befehlsgebers 8 und des damit verbundenen zweiten Detektionsobjekts 32 Bewegungen entstehen.

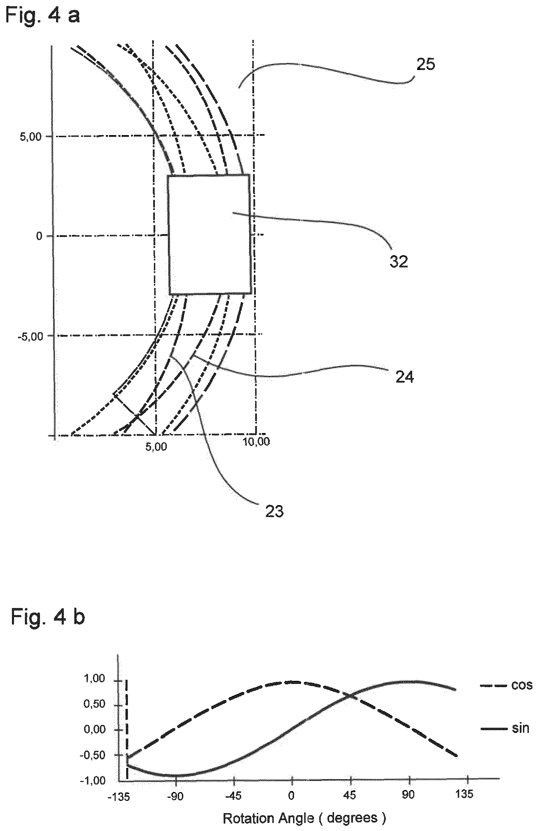

Eine Veränderung des induktiven Wirbelstrom-Feldes 14 kann den Figuren 4a und 4b entnommen werden. Sobald nämlich das zweite Detektionsobjekt 32 die beiden Empfangs-Spulen 27 und 28, die räumlich versetzt zueinander auf der Leiterplatte 25 angeordnet sind, überstreicht, entsteht eine Phasenverschiebung gemäß Figur 4b von 90°, die von der Auswerteeinrichtung 9 messbar und in ein elektrisches Schaltsignal umgewandelt ist.

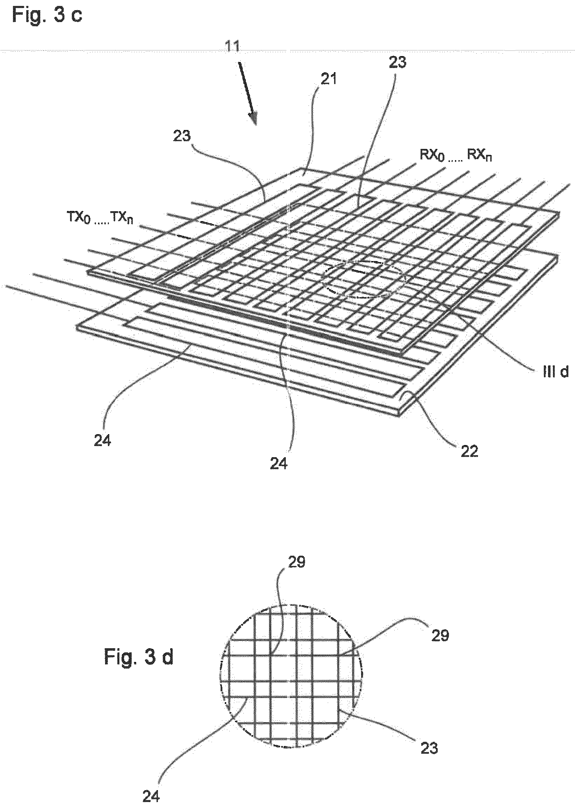

Gemäß Figur 3c ist der konstruktive Aufbau des ersten Sensors 11 erkennbar. Der Sensor 11 besteht dabei aus zwei Sensorgläsern 21 und 22, die eine Schichtdicke von 0,55 mm oder 1,1 mm aufweisen. In oder auf dem jeweiligen Sensorglas 21 bzw. 22 sind eine Vielzahl von galvanisch voneinander getrennten Leiterbahnen 23 bzw. 24 vorgesehen. Im zusammengebauten Zustand verlaufen die Leiterbahnen 23 in Y- und die Leiterbahnen 24 in X-Richtung, sodass diese zwar übereinander verlaufen und eine Vielzahl von Knotenpunkten 29 bilden. Dies ist in Figur 3d in vergrößerter Darstellung abgebildet.

Jeder der Knotenpunkte 29 stellt dabei eine erste Kondensatorplatte dar, durch die das elektrische Feld 13 erzeugt ist. Sobald das erste Detektionsobjekte 31 des Befehlsgebers 8 über einen der Knotenpunkte 29 bewegt wird, verändert sich das elektrische Feld 13 in den Bereich des jeweiligen überfahrenen Knotenpunkts 29. Folglich kann durch die Auswerteeinrichtung 9 sowohl die Bewegung des Befehlsgebers 8 als auch dessen Richtung oder die Rotationsgeschwindigkeit erfasst und in ein entsprechendes Steuersignal umgewandelt sein.

Erst wenn durch die Auswerteeinrichtung 9 sowohl eine Veränderung des elektrischen Feldes 13 als auch des induktiven Wirbelstrom-Feldes 14 festgestellt ist, erfolgt eine Schaltfreigabe. Somit sind ungewollte durch Umwelteinflüsse möglicherweise ausgelöste Fehlfunktionen vermieden, denn die Veränderungen des elektrischen Feldes 13 und des induktiven Wirbelstrom-Feldes 14 müssen zeitgleich und unabhängig voneinander durch die Auswerteeinrichtung 9 festgestellt sein, sodass eine redundante Befehlseingabe-Vorrichtung 1 zur Verfügung steht.

In Figur 4a ist ausschnittsweise die Leiterplatte 25 zu entnehmen, der die beiden Leiterbahnen 23 und 24 zugeordnet sind. Die beiden Leiterbahnen 23 und 24 bilden unabhängig voneinander das induktive Wirbelstrom-Feld aus. Fluchtend zu den beiden Leiterbahnen 23 und 24 ist das zweite Detektionsobjekt 32 in dem Befehlsgeber 8 angeordnet. Sobald das Detektionsobjekt 32 über die beiden Leiterbahnen 23 und 24 relativ zu diesem bewegt ist, entsteht eine Veränderung des induktiven Wirbelstrom-Feldes.

Gemäß Figur 4b ist die Phasenverschiebung der beiden Wirbelstrom-Felder der Leiterbahnen 23 und 24 zu entnehmen, wenn das Detektionsobjekt 32 diese überfahren hat. Der Radius des Detektionsobjektes 32 und der Leiterbahnen 23 und 24 ist derart bemessen, dass das Detektionsobjekte 32 unabhängig von der Position des Befehlsgebers 8 unmittelbar fluchtend zu den Leiterbahnen 23 und 24 verläuft. Durch die Anordnung der Leiterbahnen 23 und 24 bzw. deren relativ zueinander verschobenen Anordnung gemäß Figur 4a entsteht die in Figur 4b auszugsweise dargestellte Phasenverschiebung.

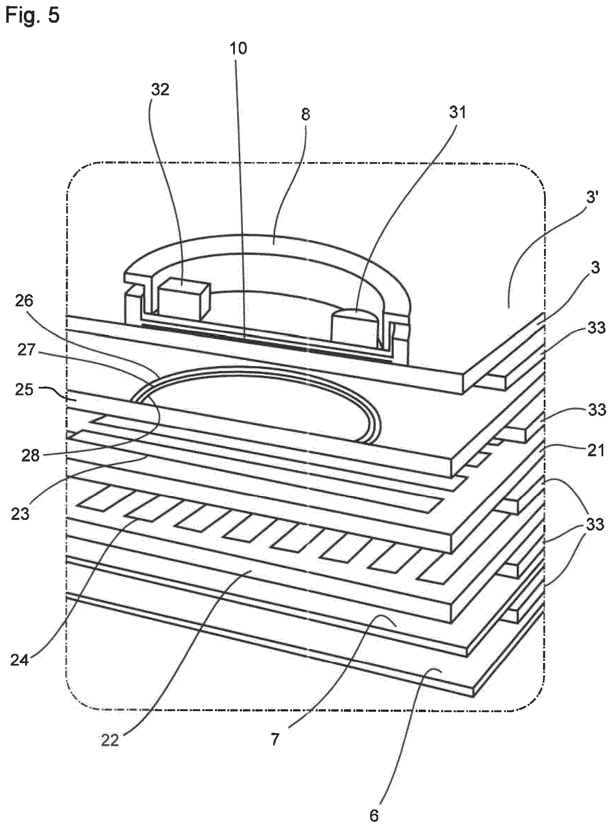

Gemäß Figur 5 sind die Sensorgläser 21 und 22 mittels einer Glasklebefolie 33, die Leiterplatte 25 ist mittels einer Glasklebefolie 33 an der Innenseite 3" der Abdeckplatte 3 befestigt und zwischen der Leiterplatte 25 und dem ersten Sensorglas 21 ist ebenso eine Glasklebefolie 33 vorgesehen. Folglich entsteht ein äußerst kompakter SandwichAufbau für die Sensor-Anordnung, die als separater Bausatz zur Nachrüstung von bereits bestehenden Befehlseingabe-Vorrichtungen 1 als auch für den Einbau von neu herzustellenden Vorrichtungen 1 Verwendung findet.

Diese Beschreibung beschreibt mehrere Ausführungsformen. Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

## Patentansprüche

1. Befehlseingabe-Vorrichtung (1) mit einem Befehlsgeber (8) und einer Sensor-Anordnung zur Erkennung von manuellen Bewegungen des Befehlsgebers (8) auf einer Außenseite (3') einer Abdeckplatte (3) der Befehlseingabe-Vorrichtung (1),
- wobei mindestens zwei Sensoren (11, 12) ein elektrisches Feld (13) und ein induktives Wirbelstrom-Feld (14) durch die Abdeckplatte (3) aussenden,
- wobei mindestens ein manuell betätigbarer Befehlsgeber (8) auf der Außenseite (3') der Abdeckplatte (3) angeordnet ist,
- und wobei eine Auswerteeinrichtung (9) mit den mindestens zwei Sensoren (11, 12) elektrisch gekoppelt ist
- wobei ein erster Sensor (11) aus zwei galvanisch voneinander getrennten Sensorgläsern (21, 22) gebildet wird,
- wobei in jedem Sensorglas (21, 22) eine Vielzahl von elektrisch bestromten Leiterbahnen (23, 24) vorgesehen sind, die jeweils voneinander galvanisch getrennt sind,
- wobei die Leiterbahnen (23) des ersten Sensorglases (21) senkrecht zu den Leiterbahnen (24) des zweiten Sensorglases (22) verlaufen, sodass zwei sich kreuzende Leiterbahnen (23, 24) jeweils einen eine Kondensatorplatte bildenden Knotenpunkt (29) darstellen, durch welchen das elektrische Feld erzeugt wird, und wobei durch die Leiterbahnen (23, 24) der beiden Sensorgläser (21, 22) in dem jeweiligen Knotenpunkt (29) ein elektrisches Feld (13) entsteht, das durch die Abdeckplatte (3) auf deren Außenseite (3') abgestrahlt wird,
wobei ein zweiter Sensor (12) aus mindestens drei auf einer Leiterplatte (25) positionierten Spulen (26, 27, 28) gebildet wird,
wobei die Leiterplatte (25) räumlich beabstandet zu den beiden Sensorgläsern (21, 22) und galvanisch von diesen getrennt angeordnet ist und in vertikaler Richtung fluchtend oberhalb oder unterhalb der beiden Sensorgläser (21, 22) parallel zu den Sensorgläsern (21, 22) vorgesehen ist,
wobei die auf der Leiterplatte (25) positionierten mindestens drei Spulen (26, 27, 28) das induktive Wirbelstrom-Feld (14) erzeugen und Wirbelstrom-Veränderungen bei einer Positionsveränderung des Befehlsgebers (8) empfangen,
und wobei an dem mindestens einen manuell betätigbaren Befehlsgeber (8) zwei räumlich voneinander getrennte Detektionsobjekte (31, 32) angeordnet sind, deren Bewegungen das elektrische Feld (13) und das induktiv von den Spulen (26, 27, 28) erzeugte und empfangene Wirbelstrom-Feld (14) gleichzeitig verändern, derart, dass diese Feld-Veränderungen (13,14) durch die Auswerteeinrichtung (9) als redundante, also verifizierte Schaltfunktion erkennbar und in elektrische Schaltsignale umwandelbar sind.

2. Sensor-Anordnung nach Anspruch 1,
wobei der mindestens eine Befehlsgeber (8) und das jeweilige elektrische Feld (13) und das induktive Wirbelstrom-Feld (14) fluchtend zueinander angeordnet sind.

3. Sensor-Anordnung nach Anspruch 1 oder 2,
wobei eine der Spulen (26) als Sender und zwei der Spulen (27, 28) als Empfänger bei der Erzeugung von Veränderungen des induktiven Wirbelstrom-Feldes (14) fungieren und dass die drei Spulen (26, 27, 28) jeweils mindestens eine umlaufende Wicklung aufweisen, die voneinander galvanisch getrennt sind und um einen gemeinsamen Mittelpunkt (30) verlaufen.

4. Sensor-Anordnung nach Anspruch 3,
wobei die äußere Spule (26) den Sender für die Erzeugung des induktiven Wirbelstrom-Feldes (14) und die beiden inneren Spulen (27, 28) den Empfänger des Wirbelstrom-Feldes (14) bilden.

5. Sensor-Anordnung nach Anspruch 3 oder 4,
wobei die beiden Empfangs-Spulen (27, 28) durch die in dem Befehlsgeber (8) angeordneten Detektionsobjekte (32) phasenverschoben, vorzugsweise um 90° versetzt, angeregt werden.

6. Sensor-Anordnung nach einem der vorgenannten Ansprüche,
wobei die Höhe der Sensorgläser (21, 22) 0,55 mm oder 1,10 mm und die Höhe der Leiterplatte (25) 0,14 mm beträgt.

7. Sensor-Anordnung nach einem der vorgenannten Ansprüche,
wobei zwischen den beiden Sensorgläsern (21, 22), zwischen dem ersten Sensorglas (21) und der Leiterbahn (25) und zwischen der Leiterbahn (25) und der Abdeckplatte (3) jeweils eine Glasklebefolie (33) eingesetzt ist, durch die eine lageorientierte Sandwich-Bauweise der Sensor-Anordnung entsteht.

## Claims

1. Command input device (1) with a command generator (8) and a sensor arrangement for detecting manual movements of the command generator (8) on an outer side (3') of a cover plate (3) of the command input device (1),
- wherein at least two sensors (11, 12) emit an electric field (13) and an inductive eddy current field (14) through the cover plate (3),
- wherein at least one manually operable command device (8) is arranged on the outer side (3') of the cover plate (3),
- and wherein an evaluation device (9) is electrically coupled to the at least two sensors (11, 12)
- wherein a first sensor (11) is formed from two sensor glasses (21, 22) that are galvanically separated from each other,
- wherein a plurality of electrically energized conductor tracks (23, 24) are provided in each sensor glass (21, 22), which are galvanically separated from one another,
- wherein the conductor tracks (23) of the first sensor glass (21) run perpendicular to the conductor tracks (24) of the second sensor glass (22), so that two intersecting conductor tracks (23, 24) each represent a node (29) forming a capacitor plate, through which the electric field is generated, and wherein the conductor tracks (23, 24) of the two sensor glasses (21, 22) generate an electric field (13) in the respective node (29), which is radiated by the cover plate (3) on its outer side (3'),
wherein a second sensor (12) is formed from at least three coils (26, 27, 28) positioned on a conductor board (25),
wherein the printed circuit board (25) is arranged at a distance from the two sensor glasses (21, 22) and is galvanically separated from them, and is provided in the vertical direction aligned above or below the two sensor glasses (21, 22) parallel to the sensor glasses (21, 22),
wherein the at least three coils (26, 27, 28) positioned on the printed circuit board (25) generate the inductive eddy current field (14) and receive eddy current changes when the position of the command generator (8) changes,
and wherein two spatially separated detection objects (31, 32) are arranged on the at least one manually operable command device (8), the movements of which simultaneously change the electric field (13) and the eddy current field (14) generated and received inductively by the coils (26, 27, 28) simultaneously, such that these field changes (13, 14) can be recognized by the evaluation device (9) as a redundant, i.e., verified switching function and converted into electrical switching signals.

2. Sensor arrangement according to claim 1,
wherein the at least one command generator (8) and the respective electric field (13) and the inductive eddy current field (14) are arranged in alignment with each other.

3. Sensor arrangement according to claim 1 or 2,
wherein one of the coils (26) functions as a transmitter and two of the coils (27, 28) function as receivers in the generation of changes in the inductive eddy current field (14), and wherein the three coils (26, 27, 28) each have at least one circumferential winding, which are galvanically isolated from each other and run around a common center point (30).

4. Sensor arrangement according to claim 3,
wherein the outer coil (26) forms the transmitter for generating the inductive eddy current field (14) and the two inner coils (27, 28) form the receiver of the eddy current field (14).

5. Sensor arrangement according to claim 3 or 4,
wherein the two receiving coils (27, 28) are excited by the detection objects (32) arranged in the command generator (8) in a phase-shifted manner, preferably offset by 90°.

6. Sensor arrangement according to one of the preceding claims,
wherein the height of the sensor glasses (21, 22) is 0.55 mm or 1.10 mm and the height of the printed circuit board (25) is 0.14 mm.

7. Sensor arrangement according to one of the preceding claims,
wherein a glass adhesive film (33) is inserted between the two sensor glasses (21, 22), between the first sensor glass (21) and the conductor track (25), and between the conductor track (25) and the cover plate (3), respectively, thereby creating a position-oriented sandwich construction of the sensor arrangement.

## Revendications

1. Dispositif de saisie de commandes (1) comprenant un émetteur de commandes (8) et un agencement de capteurs pour détecter les mouvements manuels de l'émetteur de commandes (8) sur une face extérieure (3') d'une plaque de recouvrement (3) du dispositif de saisie de commandes (1),
- au moins deux capteurs (11, 12) émettant un champ électrique (13) et un champ inductif à courants de Foucault (14) à travers la plaque de recouvrement (3),
- au moins un émetteur de commande (8) actionnable manuellement étant disposé sur la face extérieure (3') de la plaque de recouvrement (3),
- et un dispositif d'évaluation (9) étant couplé électriquement aux au moins deux capteurs (11, 12)
- un premier capteur (11) étant formé de deux verres de capteur (21, 22) séparés galvaniquement l'un de l'autre,
- chaque verre de capteur (21, 22) comportant une pluralité de pistes conductrices (23, 24) alimentées en courant électrique, qui sont séparées galvaniquement les unes des autres,
- les pistes conductrices (23) du premier verre de capteur (21) s'étendant perpendiculairement aux pistes conductrices (24) du deuxième verre de capteur (22), de sorte que deux pistes conductrices qui se croisent (23, 24) forment chacune un point nodal (29) constituant une plaque de condensateur, à travers lequel le champ électrique est généré, et les pistes conductrices (23, 24) des deux verres de capteur (21, 22) créent dans le point de jonction respectif (29) un champ électrique (13) qui est rayonné par la plaque de recouvrement (3) sur sa face extérieure (3'),
un deuxième capteur (12) étant formé d'au moins trois bobines (26, 27, 28) positionnées sur une carte de circuit imprimé (25),
la carte de circuit imprimé (25) étant espacée des deux verres de capteur (21, 22) et séparée galvaniquement de ceux-ci, et étant prévue dans le sens vertical, alignée au-dessus ou au-dessous des deux verres de capteur (21, 22), parallèlement aux verres de capteur (21, 22),
les au moins trois bobines (26, 27, 28) positionnées sur la carte de circuit imprimé (25) générant le champ inductif de courants de Foucault (14) et recevant les variations des courants de Foucault en cas de changement de position du dispositif de commande (8),
et dans lequel deux objets de détection (31, 32) séparés l'un de l'autre dans l'espace sont disposés sur au moins un émetteur de commande (8) actionnable manuellement, dont les mouvements modifient simultanément le champ électrique (13) et le champ de courants de Foucault (14) généré et reçu par induction par les bobines (26, 27, 28), de telle sorte que ces modifications de champ (13, 14) puissent être reconnues par le dispositif d'évaluation (9) comme une fonction de commutation redondante, c'est-à-dire vérifiée, et converties en signaux de commutation électriques.

2. Dispositif de capteur selon la revendication 1,
dans lequel le au moins un générateur de commande (8) et le champ électrique respectif (13) et le champ de courants de Foucault inductif (14) sont disposés en alignement les uns par rapport aux autres.

3. Dispositif capteur selon la revendication 1 ou 2,
dans lequel l'une des bobines (26) fait office d'émetteur et deux des bobines (27, 28) font office de récepteurs lors de la génération de modifications du champ inductif à courants de Foucault (14) et dans lequel les trois bobines (26, 27, 28) comportent chacune au moins un enroulement circonférentiel qui sont séparés galvaniquement les uns des autres et s'étendent autour d'un centre commun (30).

4. Dispositif de capteurs selon la revendication 3,
la bobine extérieure (26) formant l'émetteur pour la génération du champ inductif à courants de Foucault (14) et les deux bobines intérieures (27, 28) formant le récepteur du champ à courants de Foucault (14).

5. Dispositif capteur selon la revendication 3 ou 4,
les deux bobines réceptrices (27, 28) étant excitées par les objets de détection (32) disposés dans le générateur de commande (8) avec un déphasage, de préférence de 90°.

6. Dispositif capteur selon l'une des revendications précédentes,
dans lequel la hauteur des verres de capteur (21, 22) est de 0,55 mm ou 1,10 mm et la hauteur de la carte de circuit imprimé (25) est de 0,14 mm.

7. Dispositif de capteurs selon l'une des revendications précédentes,
dans lequel une feuille adhésive en verre (33) est insérée entre les deux verres de capteur (21, 22), entre le premier verre de capteur (21) et la piste conductrice (25) et entre la piste conductrice (25) et la plaque de recouvrement (3), ce qui permet d'obtenir une structure en sandwich orientée par couche de l'agencement de capteurs.
